# EUROPEAN PATENT SPECIFICATION

(11) **EP 4 494 911 B1**
(45) Date of publication and mention of the grant of the patent: **01.04.2026**
(21) Application number: 23187037.9
(22) Date of filing: 21.07.2023
(51) Int. Cl.: B60K 31/12, B60W 30/02, B60W 30/18, B60W 40/109, B60W 50/00, B60W 50/14, B60K 31/00

(54) **A METHOD FOR INCREASING CORNER STABILITY OF A VEHICLE AND ELECTRONIC CONTROL MODULE**
VERFAHREN ZUR ERHÖHUNG DER KURVENSTABILITÄT EINES FAHRZEUGS UND ELEKTRONISCHES STEUERGERÄT
PROCÉDÉ POUR AUGMENTER LA STABILITÉ EN VIRAGE D'UN VÉHICULE ET MODULE DE COMMANDE ÉLECTRONIQUE

(43) Date of publication of application: 22.01.2025
(73) Proprietor: AUMOVIO Germany GmbH, 60488 Frankfurt am Main (DE)
(72) Inventor: Logachari, Jaganathan, 60488 Frankfurt am Main (DE)
(74) Representative: Aumovio Corporation

(56) References cited:
- WO-A1-2015/178840
- CN-A- 116 252 810
- US-A1- 2002 128 764
- US-A1- 2012 109 471
- US-A1- 2015 197 225
- US-A1- 2022 203 999

## Description

The invention relates to a method for increasing corner stability of a vehicle and to a corresponding control module.

Vehicles typically drive on roads, which can comprise curves. In a curve, a vehicle is subject to a lateral acceleration, which may lead to understeering or oversteering. It is known that electronic stability control systems can be used in vehicles in order to reduce understeering or oversteering by selectively applying a brake force to one wheel of an axis.

US 2015/197225 A1 shows a method in which the route ahead and the current speed of the vehicle are determined, and an expected lateral acceleration is calculated from this. If the lateral acceleration exceeds a threshold, a deceleration of the car is carried out. Similar methos are shown in US2022/203999 A1, JP 201/356131 A1, EP 3 145 780 B1 or US 2012/109 471 A1.

It is an object of the invention to provide for a method and a corresponding control apparatus that allows reducing the situations in which an electronic stability control has to influence the driving of the vehicle. This is achieved by a method and by a corresponding control module according to the respective main claims. Preferred embodiments may, for example, be derived from the respective dependent claims.

The invention relates to a method for increasing corner stability of a vehicle. The method comprises the following steps:
- recognizing a course ahead of a road on which the vehicle is driving,
- determining a speed of the vehicle,
- determining an expected lateral acceleration based on the course ahead and the speed, and
- if the expected lateral acceleration exceeds a first threshold, activating a reaction.

The reaction is a warning issued to a driver of the vehicle. If an amount of the expected lateral acceleration exceeds a second threshold, the reaction is a reduction of engine torque. If an amount of the expected lateral acceleration exceeds a third threshold, the reaction is a brake actuation.

This allows for proactively determining if a lateral acceleration will be so high that problems with the stability of the vehicle are to be expected, and to proactively activate a reaction, wherein the reaction may, for example, reduce the risk that a problem with the stability will occur. This can reduce the numbers of activation of electronic stability control and a corresponding selective braking of one wheel of an axis.

Corner stability is especially regarded as the stability of a vehicle when driving through a curve of a road. The corner stability may especially be regarded as an omission of understeering or oversteering situations. The course ahead of a road may especially comprise the course of the road in front of the vehicle, as, for example, it is seen on a map or from a bird's perspective. The road may be recognized, for example, by using navigation, for example satellite navigation. The road may also be recognized by using environmental sensors, for example as described further below. The speed may be determined by means like wheel sensors or satellite navigation. The speed may especially be the absolute speed over ground. The lateral acceleration may especially be calculated by using a formula, which may, for example, comprise a detected curvature or a detected radius of a curve and the speed. The first threshold may especially be set such that if the expected lateral acceleration exceeds this first threshold, a significant understeer or oversteer condition is to be expected.

The course ahead may especially be recognized by one or more environmental sensors, for example radar, lidar and/or one or more cameras. However, also other means can be used. For example, the course ahead may be recognized by an electronic map. Also, a combination of the mentioned means or other means can be used.

The reaction is a warning issued to a driver of the vehicle. The warning may especially be an acoustic warning and/or an optical warning. For example, a light may be activated in order to issue the warning. Especially, the warning can advise the driver to reduce speed.

It is implemented that if an amount of the expected lateral acceleration exceeds a second threshold, the reaction is reduction of engine torque. This second threshold is especially higher than the first threshold. A reduction of engine torque may especially lead to a reduction in acceleration or to a reduction in the speed of the vehicle. This may lead to the vehicle entering the curve with less speed, and thus with less lateral acceleration.

It is implemented, that if an amount of the expected lateral acceleration exceeds a third threshold, the reaction is a brake actuation. This may actively reduce the speed of the vehicle in order to reduce the lateral acceleration actually seen in the curve. Especially, the third threshold is higher than the first threshold and/or the second threshold.

The determining of a lateral acceleration to be expected may especially be dependent on whether a trailer is attached to the vehicle. Especially, it may be included in a calculation if a trailer may reduce effectiveness of brake action or may usually make a driver to reduce speed on his own.

Especially, it may be implemented that one or more thresholds, especially the first threshold, the second threshold and/or the third threshold, may be dependent on whether a trailer is attached to the vehicle. Especially, the thresholds may be lower if a trailer is attached to the vehicle. This may ensure that a reaction to reduce lateral acceleration is initiated earlier compared with a situation in which no trailer is attached to the vehicle. A trailer may typically lead to an increased effect of understeer or oversteer, and thus a situation of instability may also be present at speeds lower compared with a situation in which no trailer is attached to the vehicle.

Especially, the method may be applied in addition to corner stability control based on one-side brake actuation. Such a corner stability control may especially be a known electronic stability control. Such systems typically activate the brake of one wheel of an axis separately without activating the brake of the other wheel of this axis. Especially, such a corner stability control may activate a brake at a rear wheel on the inner side of a curve in case of an understeering. Especially, a corner stability control may activate a brake at a front wheel at an outer side of a curve in case of an oversteering. This may be used while driving through a curve in addition to the method aspects disclosed herein.

The invention relates further to an electronic control module being configured to perform a method as disclosed herein. An electronic control module may especially be embodied as a processor or microcontroller together with a suitable storage medium storing instruction codes. It may also be implemented as application specific integrated circuit. The invention relates further to a non-transitory computer-readable storage medium comprising program code that makes a processor to perform a method as disclosed herein. With regard to the method, all disclosed embodiments and variations may be applied.

Especially, the aspects disclosed herein relate to a potential instability scenario of a vehicle and to informing a driver in case of driver mode using sensorics. It is known that cornering stability may be maintained by electronic stability control that may react to an oversteer scenario or to an understeer scenario, especially by comparing steering wheel angle sensor and vehicle's inertial measurement unit. If a yaw rate of a vehicle is less or more than a driver's demand, it is detected as instable scenario and brakes are applied accordingly to bring the vehicle to stability. However, the known approach is only a reactive approach to instability caused already. This may have some intervention during the drive and might lead to panic of a driver.

In a proposed method, a road curvature ahead is sensed and estimated, for example using radar. Knowing the road's curvature and vehicle's velocity, lateral acceleration may be computed and may be compared with vehicle's threshold lateral acceleration safe for cornering. If it is higher than the threshold, the following actions could be taken:
- suggest safe velocity with warning to driver via HMI (Human Machine Interface),
- reduce engine torque as second level,
- apply brake as third level.

This method is a proactive safety to a potential instability instead of reacting to an instability. This especially has the advantages that it is a proactive warning to a potential instability, that enhanced (double layer) safety (proactive stability control and reactive stability control) is possible, and that one could take a trailer into consideration and suggest safety velocity to avoid instability.

The invention will now be further described with respect to the accompanying drawings.
- Fig. 1:: shows a vehicle on a road, and
- fig. 2:: shows a vehicle with a trailer on a road.

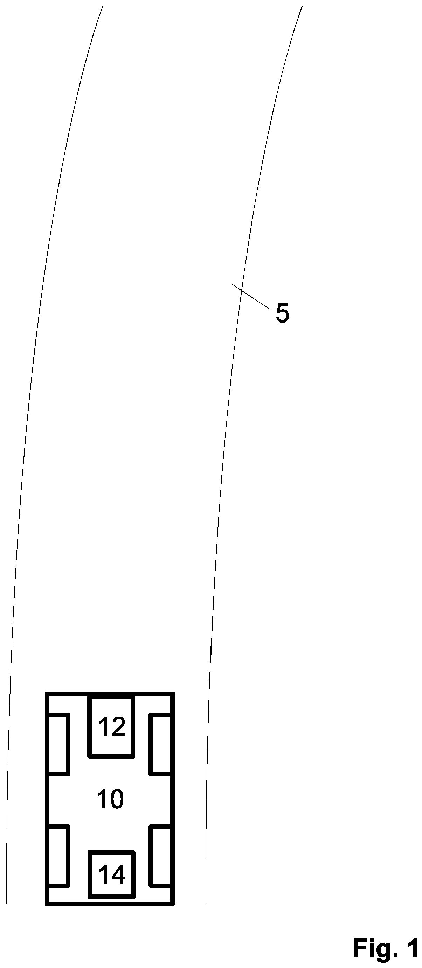

Fig. 1 shows a vehicle 10 driving on a road 5. The vehicle 10 is driving along the road, primarily in an upper direction with regard to fig. 1. The vehicle 10 has an environmental sensor 12, in the present case being a radar sensor. The radar sensor is adapted in order to sense the road 5, so that the path ahead of the vehicle 10 can be determined.

The vehicle 10 has a control module 14 being configured to perform a method as disclosed herein. The control module 14 gets input data from the environmental sensor 12 and calculates a curvature of a curve ahead of the vehicle 10. It also determines a current speed of the vehicle 10 by known means, such as wheel sensors. With the curvature and the speed, an expected lateral acceleration of the vehicle 10 when driving the curve ahead of the vehicle is calculated. This expected lateral acceleration is then compared with three thresholds.

Should the expected lateral acceleration exceed a first threshold, a warning message is given to a driver of the vehicle 10 so that he reduces the speed of the vehicle 10.

Should the expected lateral acceleration exceed a second threshold, an engine torque of an engine driving the vehicle 10 is reduced. The second threshold is higher than the first threshold.

Should the expected lateral acceleration exceed a third threshold, a brake system of the vehicle 10 is activated in order to actively reduce the speed of the vehicle 10. The third threshold is higher than the second threshold.

Should the lateral acceleration actually experienced in the curve, despite these measures, be such that an oversteer or an understeer situation occurs, classical means of reducing such an oversteer or understeer may be applied, especially braking one wheel of an axis while not braking the other wheel of that axis.

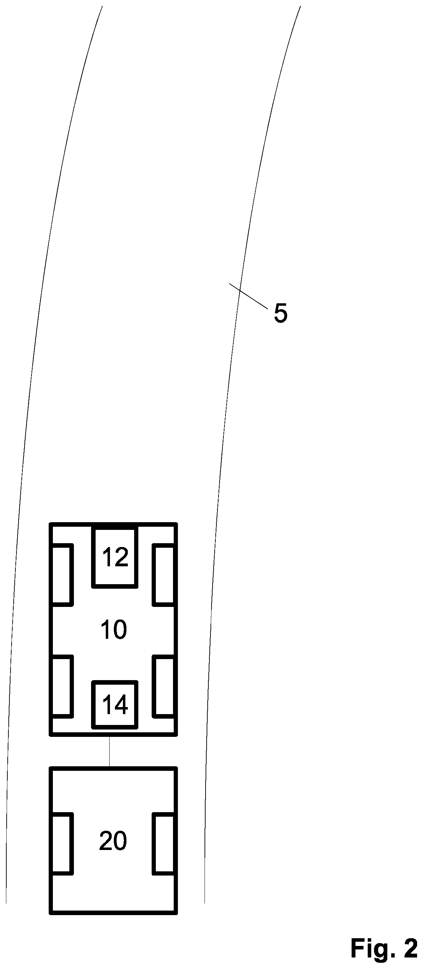

Fig. 2 shows a vehicle 10, to which a trailer 20 is attached. It also drives on a road 5. In principle, the mechanisms already explained with regard to fig. 1 can be applied. However, the thresholds are lowered, so that the vehicle 10 enters the curve 5 with a lower expected lateral acceleration. This takes into account the fact that with the trailer 20, an understeer situation or an oversteer situation occurs at even lower speeds.

Mentioned steps of the inventive method can be performed in the given order.

However, they can also be performed in another order, as long as this is technically reasonable. The inventive method can, in an embodiment, for example with a certain combination of steps, be performed in such a way that no further steps are performed. However, also other steps may be performed, including steps that are not mentioned.

### List of reference signs

- 5: road
- 10: vehicle
- 12: environmental sensor
- 14: control module
- 20: trailer

## Claims

1. A method for increasing corner stability of a vehicle (10), the method comprising the following steps:
- recognizing a course ahead of a road (5) on which the vehicle (10) is driving,
- determining a speed of the vehicle (10),
- determining a lateral acceleration to be expected based on the course ahead and the speed, and
- if the expected lateral acceleration exceeds a first threshold, activating a reaction
wherein
- the reaction is a warning issued to a driver of the vehicle; **characterized in that**:
- if an amount of the expected lateral acceleration exceeds a second threshold, the reaction is a reduction of engine torque
- if an amount of the expected lateral acceleration exceeds a third threshold, the reaction is a brake actuation wherein the second threshold is higher than the first threshold and wherein the third threshold is higher than the first and/or the second threshold.

2. Method according to claim 1,
- wherein the course ahead is recognized by one or more environmental sensors (12), radar, LIDAR, and/or camera.

3. Method according to one of the preceding claims,
- wherein the course ahead is recognized by an electronic map. (10).

4. Method according to one of the preceding claims,
- wherein the determining of a lateral acceleration to be expected is dependent on whether a trailer (20) is attached to the vehicle (10).

5. Method according to one of the preceding claims,
- wherein one or more thresholds are dependent on whether a trailer (20) is attached to the vehicle (10).

6. Method according to one of the preceding claims,
- wherein the method is applied in addition to corner stability control based on one-side brake actuation.

7. Electronic control module (14), being configured to perform a method according to one of the preceding claims.

## Patentansprüche

1. Verfahren zur Erhöhung der Kurvenstabilität eines Fahrzeugs (10), wobei das Verfahren die folgenden Schritte umfasst:
- Erkennen eines vorausliegenden Verlaufes einer Straße (5), auf der das Fahrzeug (10) fährt,
- Bestimmen einer Geschwindigkeit des Fahrzeugs (10),
- Bestimmen einer zu erwartenden Querbeschleunigung basierend auf dem vorausliegenden Verlauf und der Geschwindigkeit und
- Aktivieren einer Reaktion, wenn die erwartete Querbeschleunigung einen ersten Schwellenwert überschreitet
wobei
- die Reaktion eine Warnung ist, die an einen Fahrer des Fahrzeugs ausgegeben wird; **dadurch gekennzeichnet, dass**:
- die Reaktion eine Reduzierung des Motordrehmoments ist, wenn ein Betrag der erwarteten Querbeschleunigung einen zweiten Schwellenwert überschreitet
- die Reaktion eine Bremsbetätigung ist, wenn ein Betrag der erwarteten Querbeschleunigung einen dritten Schwellenwert überschreitet wobei der zweite Schwellenwert höher als der erste Schwellenwert ist und wobei der dritte Schwellenwert höher als der erste und/oder der zweite Schwellenwert ist.

2. Verfahren nach Anspruch 1,
- wobei der vorausliegende Verlauf durch einen oder mehrere Umgebungssensoren (12), Radar, LIDAR und/oder eine Kamera erkannt wird.

3. Verfahren nach einem der vorhergehenden Ansprüche,
- wobei der vorausliegende Verlauf durch eine elektronische Karte (10) erkannt wird.

4. Verfahren nach einem der vorhergehenden Ansprüche,
- wobei das Bestimmen einer zu erwartenden Querbeschleunigung davon abhängt, ob ein Anhänger (20) an dem Fahrzeug (10) angebracht ist.

5. Verfahren nach einem der vorhergehenden Ansprüche,
- wobei ein oder mehrere Schwellenwerte davon abhängen, ob ein Anhänger (20) an dem Fahrzeug (10) angebracht ist.

6. Verfahren nach einem der vorhergehenden Ansprüche,
- wobei das Verfahren zusätzlich zu einer Kurvenstabilitätssteuerung basierend auf einer einseitigen Bremsbetätigung angewendet wird.

7. Elektronisches Steuergerät (14), das dazu konfiguriert ist, ein Verfahren nach einem der vorhergehenden Ansprüche durchzuführen.

## Revendications

1. Procédé d'augmentation de la stabilité en virage d'un véhicule (10), le procédé comprenant les étapes suivantes consistant à:
- reconnaître en amont une trajectoire d'une route (5) sur laquelle roule le véhicule (10),
- déterminer une vitesse du véhicule (10),
- déterminer une accélération latérale attendue en fonction de la trajectoire reconnue en amont ainsi que de la vitesse, et
- si l'accélération latérale attendue dépasse un premier seuil, activer une réaction dans lequel
- la réaction est un avertissement adressé à un conducteur du véhicule; **caractérisé en ce que**:
- si une quantité de l'accélération latérale attendue dépasse un deuxième seuil, la réaction est une réduction du couple moteur
- si une quantité de l'accélération latérale attendue dépasse un troisième seuil, la réaction est un actionnement de frein
dans lequel le deuxième seuil est supérieur au premier seuil et dans lequel le troisième seuil est supérieur au premier et/ou au deuxième seuil.

2. Procédé selon la revendication 1,
- dans lequel la trajectoire reconnue en amont est reconnue au moyen d'un ou plusieurs capteurs environnementaux (12), radar, LIDAR et/ou caméra.

3. Procédé selon l'une des revendications précédentes,
- dans lequel la trajectoire reconnue en amont est reconnue au moyen d'une carte électronique (10).

4. Procédé selon l'une des revendications précédentes,
- dans lequel la détermination d'une accélération latérale attendue dépend de la fixation ou non d'une remorque (20) au véhicule (10).

5. Procédé selon l'une des revendications précédentes,
- dans lequel un ou plusieurs seuils dépendent de la fixation ou non d'une remorque (20) au véhicule (10).

6. Procédé selon l'une des revendications précédentes,
- dans lequel le procédé est appliqué en plus d'une commande de stabilité en virage sur la base d'un actionnement de frein d'un côté.

7. Module de commande électronique (14), configuré pour mettre en œuvre un procédé selon l'une des revendications précédentes.
